# EUROPEAN PATENT SPECIFICATION

(11) **EP 3 831 623 B1**
(45) Date of publication and mention of the grant of the patent: **19.02.2025**
(21) Application number: 19869297.2
(22) Date of filing: 19.07.2019
(51) Int. Cl.: B60C 23/04, B60C 19/00, B29D 30/00, B60C 23/06

(54) **FUNCTIONAL COMPONENT, STRUCTURE FOR ATTACHING FUNCTIONAL COMPONENT TO TIRE, AND TIRE**
FUNKTIONALE KOMPONENTE, STRUKTUR ZUR BEFESTIGUNG EINER FUNKTIONALEN KOMPONENTE AN EINEM REIFEN UND REIFEN
COMPOSANT FONCTIONNEL, STRUCTURE DE FIXATION DE COMPOSANT FONCTIONNEL À UN PNEU ET PNEU

(30) Priority: 01.10.2018 JP 2018186736
(43) Date of publication of application: 09.06.2021
(73) Proprietor: BRIDGESTONE CORPORATION, Chuo-ku Tokyo 104-8340 (JP)
(72) Inventor: YAMAGUCHI, Shigeru, Tokyo 104-8340 (JP)
(74) Representative: Marks & Clerk LLP
(86) International application number: PCT/JP2019/028506
(87) International publication number: WO 2020/070951

(56) References cited:
- EP-A2- 0 936 089
- WO-A1-2006/064902
- WO-A1-2013/005639
- DE-A1- 102012 007 071
- JP-A- 2009 198 505
- JP-A- 2013 226 853
- JP-A- 2014 054 959
- JP-A- 2014 118 078
- US-A1- 2017 001 483

## Description

### TECHNICAL FIELD

The present invention relates to an attachment structure for attaching a functional component or the like to a tire.

### BACKGROUND ART

Conventionally, there has been known an attachment structure for fitting a functional component having an electronic component housed in a case (housing) thereof for acquiring a use status of a tire, into a patch member provided on an inner surface of the tire (Patent Document 1). Reference is also made to EP 0936089, JP 2014-118078, US 2017/001483 and DE 10 2012 007071.

### CITATION LIST

### Patent Document

Patent Document 1: Japanese Unexamined Patent Application Publication No. 2013-226853.

### SUMMARY OF THE INVENTION

### Technical Problem

However, in the conventional attachment structure, since the functional component is separable from the tire, the functional component cannot be used as a management tag in which information on individual tires is recorded, such as RFID or the like, for example. In addition, since a total weight of the functional component is a sum of a weight of the housing and a weight of the patch member, the weight tends to be high due to a size, a shape and an internal structure of the patch member. Furthermore, the production cost of the functional component is a sum of a production cost of the housing and a production cost of the patch member. Specifically, the patch member is required to be vulcanized and adhered to the inner surface of the tire by providing a thin rubber layer called an adhesive layer on an adhesive surface of a base member made by vulcanizing and molding rubber, and due to the increase in the work process, the patch member tends to be costly. As a measure to solve these problems, it is conceivable to omit the patch member and bond the housing directly to the inner surface of the tire using an adhesive agent. However, since tires are repeatedly deformed when coming into contact with the road surface, simply adhering the housing may cause it to come off the inner surface of the tire, or the housing may crack due to the impact at the time of contacting the ground, or the electronic component inside the housing may be damaged. Therefore, in order to prevent these problems, it is necessary to bond the housing to the inner surface of the tire by the adhesive agent with a sufficient thickness .

The present invention has been made in view of the above-mentioned problems, and aims at providing an attachment structure for attaching, to a tire, a functional component or the like that can secure, when the functional component is attached to the tire, sufficient thickness of the adhesive agent and that can improve the adhesive strength.

### Solution to Problem

As the structure for attaching the functional component for solving the above-mentioned problems, there is provided an attachment structure with the features of claim 1.

In addition, as the structure of a tire for solving the above-mentioned problems, there may be provided a tire in which the functional component is attached to the inner peripheral surface of the tire by the attachment structure described above.

### BRIEF DESCRIPTION OF THE DRAWINGS

FIGS. 1A and 1B are diagrams illustrating a functional component attached to a tire.
FIG. 2 is a perspective view of a housing.
FIGS. 3A to 3C are plan views and a partial cross-sectional view of a housing case.
FIGS. 4A to 4C are external perspective views and a cross-sectional view of a skirt.
FIG. 5 is a cross-sectional view of the functional component.
FIGS. 6A and 6B are diagrams illustrating the attachment process.
FIG. 7 is a diagram illustrating a filled state of an adhesive agent.
FIG. 8 is a diagram illustrating the adhesion to the tire.
FIG. 9 is a diagram illustrating the action of convex parts
FIGS. 10A and 10B are an external perspective view and a cross-sectional view of a functional component according to another embodiment.
FIG. 11 is a diagram illustrating a schematic configuration of a strain sensor and its output.
FIG. 12 is a diagram illustrating the adhesion to the tire.
FIG. 13 is a diagram illustrating the output of the strain sensor.
FIG. 14 is a diagram illustrating positions of the functional component during rotation of the tire.
FIG. 15 is a diagram illustrating an example of the strain detected by the strain sensor during rotation of the tire.
FIG. 16 is a diagram illustrating a change in a loaded state of a vehicle.

Hereinafter, the present invention will be described in detail through embodiments of the invention, but the following embodiments are not intended to limit the invention set forth in the claims.

### DESCRIPTION OF EMBODIMENTS

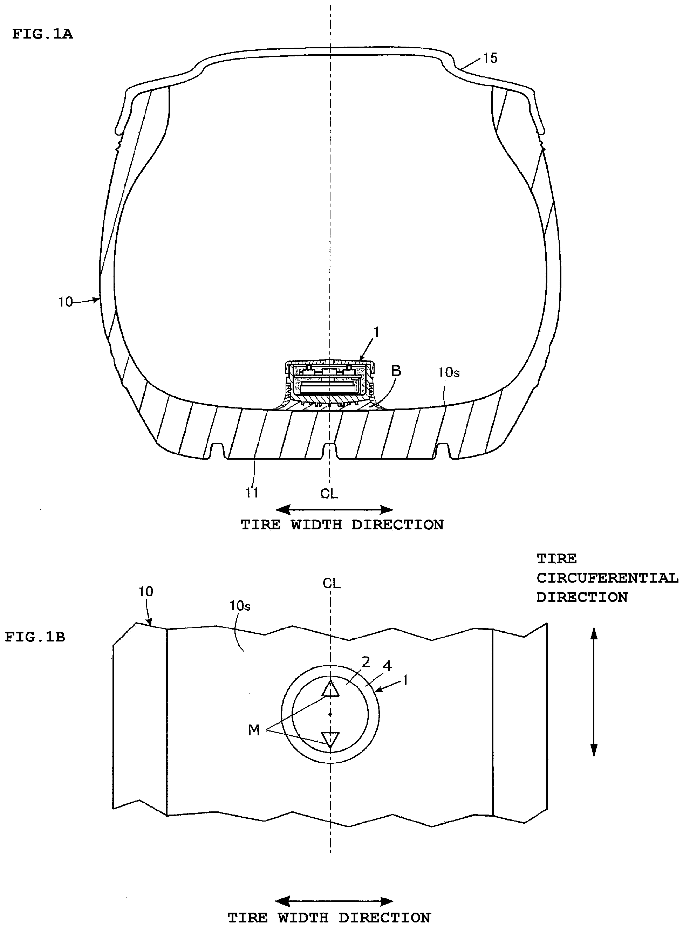

FIGS. 1A and 1B are diagrams illustrating an attachment state of a functional component 1 attached to a tire 10. As illustrated in FIG. 1A, the tire 10 is assembled to a wheel rim 15, and an inner space of the tire 10 is filled with gas such as air.

As illustrated in FIGS. 1A and 1B, the functional component 1 is fixed by an adhesive agent B to an inner surface (inner peripheral surface 10s) of the tire 10 and is disposed in the center in a width direction of the inner peripheral surface 10s that is a back side of a tread 11, which contacts with a road surface, of the tire 10.

The functional component 1 has a housing (housing part) 2, a skirt (tubular part) 4 and a module 6. Incidentally, the type of the tire 10 to which the functional component 1 is to be attached is not particularly limited, but the functional component 1 is attached mainly to tires of automobiles traveling on ordinary paved roads (general roads and highways) such as passenger cars, trucks and buses, and of aircraft, and the like.

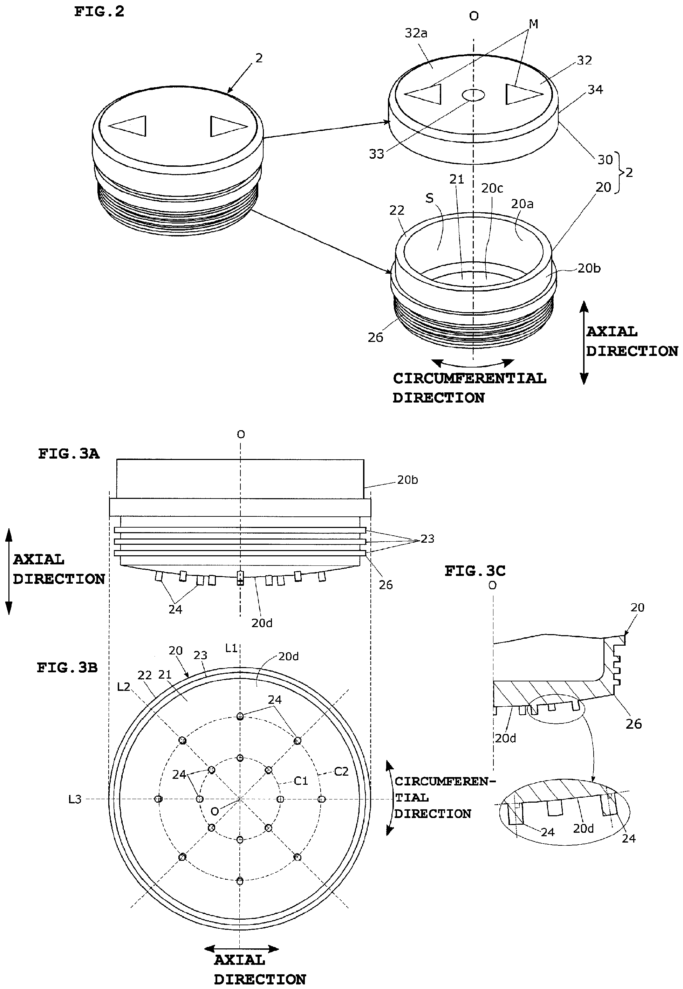

FIG. 2 is a perspective view of the housing 2. FIGS 3A to 3C are plan views and a partial cross-sectional view of a housing case 20 of the housing 2. As illustrated in FIG. 2, the housing 2 includes the housing case 20 having a housing space S (housing part) for a module 6, and a cap 30 functioning as a lid member for the housing case 20, and is formed in a generally disk shape by combining the housing case 20 and the cap 30 together. For the housing case 20 and the cap 30, synthetic resin or the like is employed, for example, from the viewpoint of weight reduction and the strength of the functional component 1.

As illustrated in FIG. 2, the housing case 20 is formed, in a bottomed cylindrical shape with an opening on one side, by a circular bottom part 21 and a peripheral wall part 22 extending along the outer periphery from the outer peripheral edge of the bottom part 21 and rising annularly from the bottom part 21. In the housing case 20, a housing space S that can house the module 6 is formed by an inner bottom surface 20c of the bottom part 21 and an inner peripheral surface 20a of the peripheral wall part 22. In the following description, terms such as an axial direction, a circumferential direction and a radial direction will be used with an axis O of the peripheral wall part 22 as a reference.

As illustrated in FIGS. 3A to 3C, a skirt attachment part 26, to which a skirt 4 described later can be attached, is formed on an outer peripheral surface 20b of the peripheral wall part 22. The skirt attachment part 26 is configured by a plurality of annular convex parts 23 formed on a lower half of the peripheral wall part 22. The annular convex part 23 is an annular member extending over the circumferential direction of the outer peripheral surface 20b, and is provided in plural numbers (three in the present embodiment) at a predetermined interval in the axial direction. Incidentally, the annular convex parts 23 may be configured to extend intermittently in the circumferential direction without extending over the entire circumference.

On the inner bottom surface 20c of the bottom part 21, a support means such as a protrusion, which is not shown in the figure, is formed for preventing the module 6 from directly contacting the inner bottom surface 20c. As illustrated in FIG. 3B, an outer bottom surface 20d of the bottom part 21 is formed in a convexed shape where a central part of the outer bottom surface 20d is convexed outwardly in the axial direction than the outer peripheral edge side of the outer bottom surface 20d. The outer bottom surface 20d is a surface that faces the inner peripheral surface 10s of the tire 10 when attached on the inner peripheral surface 10s of the tire 10. In more detail, the outer bottom surface 20d is formed in a spherical shape having a predetermined radius of curvature and of which center of curvature is set on the axis O. Incidentally, the bulging shape of the outer bottom surface 20d is not limited to the spherical shape. For example, it may be a polygonal pyramid shape such as a cone or a square pyramid with the position of the apex being set on the axis O, or any other curved shape such as a frustum formed by a part of an elliptic sphere. The outer bottom surface 20d does not need to be bulged out over its entirety, but may be partially bulged out in a curved shape as described above. For example, in a case where the tire outer diameter is large, the outer bottom surface 20d may be formed in a flat shape.

The outer bottom surface 20d is provided with a plurality of convex parts 24 projecting from the outer bottom surface 20d toward the inner peripheral surface 10s of the tire 10. As illustrated in FIG. 3B, the plurality of convex parts 24 are provided at positions where two concentric circles C1; C2 of different diameters centered on the axis O penetrating the outer bottom surface 20d intersect a plurality of radial lines L1 to L3 extending in the radial direction from the axis O. Furthermore, as illustrated in FIG. 3C, the convex parts 24 are formed to project in the normal direction of the outer bottom surface 20d at each position. That is, the convex parts 24 are formed radially about the axis O of the outer bottom surface 20d and at even intervals in the circumferential direction (even intervals about the axis O). The length of the convex parts 24 extending from the outer bottom surface 20d may be set appropriately, namely, the length may be such that the convex parts 24 do not protrude beyond a distal end 44A of the skirt 4 described later when the skirt 4 is attached to the housing case 20. In the present embodiment, the convex parts 24 are formed in a columnar shape, but the shape of the convex parts 24 is not limited to the columnar shape. Instead of the convex parts 24 protruding from the outer bottom surface 20d, concave parts may be formed that recess from the outer bottom surface 20d toward the inner bottom surface 20c side. The convex parts and the concave parts may also be formed in a combined manner.

The concave parts may be formed, for example, like dimples of a golf ball.

As illustrated in FIG. 2, a cap 30 has a circular ceiling part 32 and a peripheral wall part 34 extending along an outer peripheral edge of the ceiling part 32. On an outer side surface 32a of the ceiling part 32, attachment marks M are formed to indicate a direction for attaching the functional component 1 to the tire 10. The attachment marks M are indicated, for example, by engraving or printing. As illustrated in FIG. 1B, the attachment marks M show that the functional component 1 is to be attached on the inner peripheral surface 10s of the tire 10 in such a manner that the arrows are oriented in the tire circumferential direction. The direction indicated by the attachment marks M may be set appropriately in accordance with a detection direction of the module 6. Furthermore, a hole 33 penetrating in the axis O direction is formed in the ceiling part 32. The hole 33 allows for communication between the housing space S of the housing case 20 and the outside when the opening of the housing case 20 is closed by the cap 30. The peripheral wall part 34 has an inner diameter capable of enclosing the outer periphery of the outer peripheral surface 20b of the peripheral wall part 22. The cap 30 configured as described above is integrated with the housing case 20 by a fitting and fixing means or the like, which is not shown in the figure, in a state in which the attachment marks M provided on the outer side surface 32a are oriented in a predetermined direction with respect to the housing case 20.

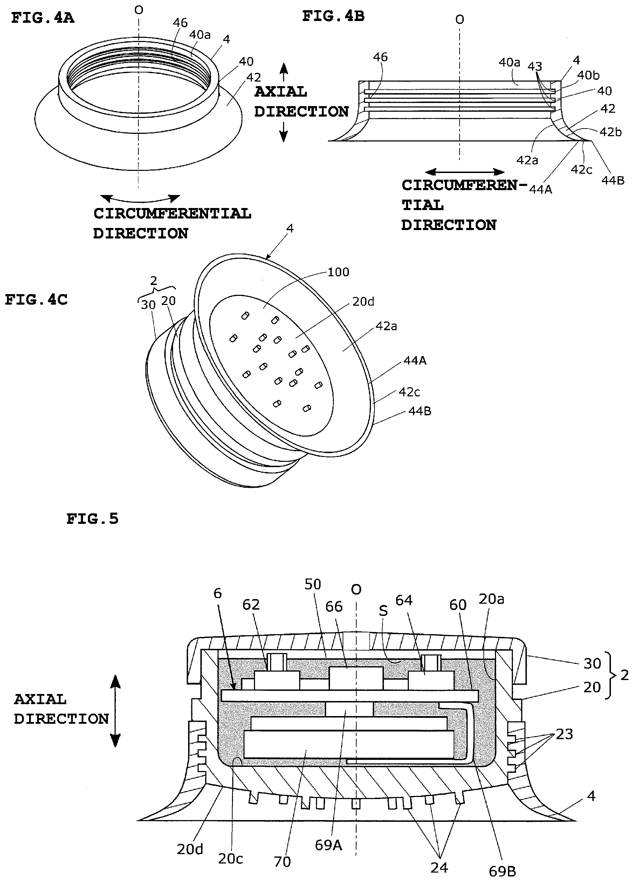

FIGS. 4A to 4C are perspective views and a cross-sectional view of the skirt 4 including the axis O. As illustrated in FIG. 1A, the skirt 4 is attached to the above-described skirt attachment part 26 formed in the housing case 20, and extends from the outer bottom surface 20d of the housing 2 toward the inner peripheral surface 10s side of the tire 10. In other words, the skirt 4 extends in a direction away from the outer bottom surface 20d of the housing case 2, with the outer bottom surface 20d of the housing 2 being a base point.

As illustrated in FIGS. 4A to 4C, the skirt 4 has an annular tubular part 40 and an enlarged part 42 extending from the tubular part 40 toward the inner peripheral surface 10s side. The tubular part 40 is formed in a cylindrical shape enclosing the skirt attachment part 26. Annular recesses 43 extending along the circumferential direction and recessed in the radial direction are formed on an inner peripheral surface 40a of the tubular part 40. The annular recess 43 is provided in plural numbers (three in the present embodiment), extends over the inner peripheral surface 40a all the way around, and is formed so as to be able to be mated with the annular convex part 23 provided in the housing case 20. In other words, the annular concave parts 43 are provided at intervals and in quantity corresponding to the annular convex parts 23.

The enlarged part 42 is formed in a fun-like shape that is continuous from the tubular part 40. An inner peripheral surface 42a of the enlarged part 42 is formed as a curved surface that, in the axial cross section, gradually expands in diameter from the outer peripheral edge of the outer bottom surface 20d of the housing case 20 toward the inner peripheral surface 10s side of the tire 10. Furthermore, an outer peripheral surface 42b is formed, for example, as a curved surface that is smoothly continuous with the outer peripheral surface 40b of the tubular part 40 and gradually expands in diameter toward the inner peripheral surface 10s of the tire 10. That is, the enlarged part 42 is formed in a generally trumpet shape that expands in diameter and extends from the outer bottom surface 20d of the housing case 20 toward the inner peripheral surface 10s side.

Furthermore, the thicknesses of the inner peripheral surface 42a and the outer peripheral surface 42b that form the enlarged part 42 are set in a tapered shape so that the thicknesses gradually become thinner toward end parts of the inner peripheral surface 10S side in the axial direction. The distal end 44A of the inner peripheral surface 42a and a distal end 44B of the outer peripheral surface 42b are connected via a flat surface 42c. In other words, the flat surface 42c is an annular surface enclosed by the distal end 44A of the inner peripheral surface 42a, the distal end 44B of the outer peripheral surface 42b and a plane perpendicular to the axis O.

The skirt 4 is preferably made of an elastic material, for example, such as rubber or elastomer and the like, or a material having flexibility. The type of rubber is not particularly limited, and natural rubber and synthetic rubbers such as dienic rubber or non-dienic rubber are enumerated. Furthermore, when the rubber is used as the material, for example, the skirt 4 is in a state of having been vulcanized and is formed into a stable shape. In other words, the skirt 4 is in a complete state as a single part.

FIG. 5 is a cross-sectional view of the functional component 1 with the module 6 housed in the housing case 20. As illustrated in FIG. 5, the module 6 is configured to be able to be housed in the housing space S of the above-mentioned housing case 20. The module 6 is provided with a circuit board 60 having electronic components mounted thereon and a battery 70. The circuit board 60 includes the electronic components which are, for example, a plurality of sensors such as a temperature sensor 62, a pressure sensor 64 and an acceleration sensor 66 and the like, each of which functions as a state acquiring means that acquires a state inside the tire, a transmitting means, which is not shown in the figure, for outputting detected values detected by each of the sensors 62, 64 and 66 to the outside of the tire, a control means that controls operations of the plurality of sensors 62, 64 and 66 and of the transmitting means, and a memory means that stores histories of the detected values detected by each of the sensors 62, 64 and 66; and metal terminals 69A and 69B for supplying power from the battery 70 to these components. Incidentally, the configuration of the circuit board 60 is not limited thereto.

The battery 70 is a so-called disk-shaped button battery, and is connected to the circuit board 60 by sandwiching each electrode between the metal terminals 69A and 69B provided on the circuit board 60. The battery 70 is not limited to the button battery, but may also be a tubular battery, and its form is not particularly limited.

The circuit board 60 and the housing case 20 are provided with a positioning means, which is not shown in the figure, that are mutually fitted with each other. Whereby, a measurement direction of the acceleration sensor 66 relative to the housing case 20 is defined.

The temperature sensor 62 and the pressure sensor 64 measure, as respective measuring parts thereof are brought in communication with a tire air chamber via the hole 33 formed in the cap 30, a temperature and a pressure in the tire air chamber, respectively.

The acceleration sensor 66 is a sensor capable of measuring acceleration in three axial directions, for example, the tire width direction, the radial direction and the circumferential direction (rotational tangential direction), and is mounted so that each measurement direction faces a predetermined direction relative to the circuit board 60. The acceleration sensor 66 is preferably mounted on the circuit board 60 so as to be located on the axis O, when the circuit board 60 is housed in the housing case 20.

The transmitting means is mounted on the circuit board as a transmitting circuit and transmits the measured temperature, the pressure, and the acceleration and so on to the outside of the tire via an antenna which is not shown in the figure. Signals such as the temperature, the pressure and the acceleration transmitted wirelessly from the transmitting means are received, for example, by a wireless circuit of a main unit provided in a vehicle, which is not shown in the figure, and information about states of the tire (the temperature, the pressure, or presence/absence of abnormality) are displayed on a display unit provided in the vehicle.

The control means is mounted on the circuit board 60 as a transmission circuit, and executes a predetermined program on the basis of, for example, the detection of rotation (centrifugal force) of the tire 10 by the acceleration sensor 66, and controls the operation of the transmitting means that transmits the temperature, the pressure and the acceleration inside the tire 10 detected by the temperature sensor 62, the pressure sensor 64 and the acceleration sensor 66. The memory means records the history of the temperature, the pressure and the acceleration inside the tire 10 detected by the temperature sensor 62, the pressure sensor 64 and the acceleration sensor 66, as well as manufacture information and quality information of the tire.

The module 6 configured as mentioned above is housed in the housing case 20 in the state that the battery 70 is connected to the circuit board 60, and positioned so that the battery 70 faces the inner bottom surface 20c of the housing space S, and the measurement direction of the acceleration sensor 66 mounted on the circuit board 60 faces the predetermined direction relative to the housing case 20.

As illustrated in FIG. 5, the housing space S is filled with a potting material 50 so as to eliminate a gap between the module 6 and the inner bottom surface 20c and the inner peripheral surf the ace 20a forming the housing space S. Whereby, the entire module 6 is covered with the potting material 50. Incidentally, even in the state of being filled with the potting material 50, the communication between respective measurement parts of the temperature sensor 62 and the pressure sensor 64 and the tire air chamber is maintained. As a material of the potting material 50, urethane-silicone resin or epoxy resin is preferable. By employing such a material to the potting material 50, the potting material 50 can maintain sufficient resistance to forces received from the battery 70 and the circuit board 60 even when the tire 10 is rotating, especially when the tire 10 is rotating at a high speed.

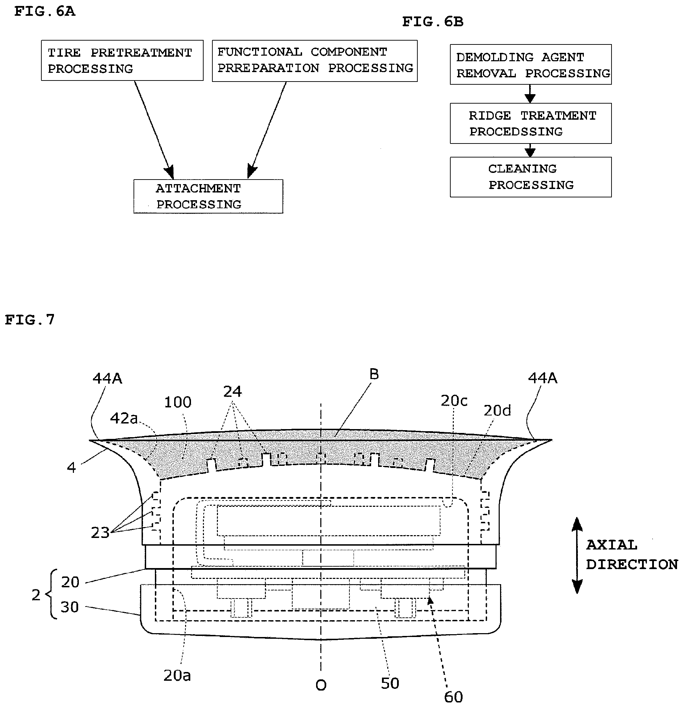

FIGS. 6A and 6B are work process diagrams illustrating the process of attaching the functional component 1 to the tire 10. As illustrated in FIG. 6A, the process of attaching the functional component 1 to the tire 10 is largely composed of a process of pretreatment to the tire 10 (tire pretreatment process), a preparation process of the functional component 1 side (functional component preparation process), and an attaching process.

As illustrated in FIG. 6B, the tire pretreatment process includes a mold release agent removal process, a ridge treatment process and a cleaning process. The mold release agent removal process is a process for removing a mold release agent adhering to the inner peripheral surface of the tire that has been vulcanized and molded, for example, spraying a spray-type degreasing agent to a predetermined position of the inner peripheral surface 10s of the tire 10 and wiping off the mold release agent.

The ridge treatment process is a process for adjusting (flattening) the ridge (convexity) formed on the inner peripheral surface 10s of the tire 10 by a bladder during vulcanizing-molding to a surrounding height, for example, polishing by buffing or the like using a rotating tool such as a leutor. In a case where this process cannot be performed, this process may be omitted. The cleaning process includes spraying a cleaning spray and drying using a dryer or the like after removing buffing grouts and the like.

As illustrated in FIG. 7, in the functional component preparation process, an adhesive agent B is filled so that a concave filling part 100 formed by the outer bottom surface 20d of the housing 2 and the inner peripheral surface 42a of the skirt 4 is filled with the adhesive agent B. At this conjuncture, it is preferable that an amount of the adhesive agent B is adjusted to be flush with or past the distal end 44A of the inner peripheral surface 42a of the skirt 4.

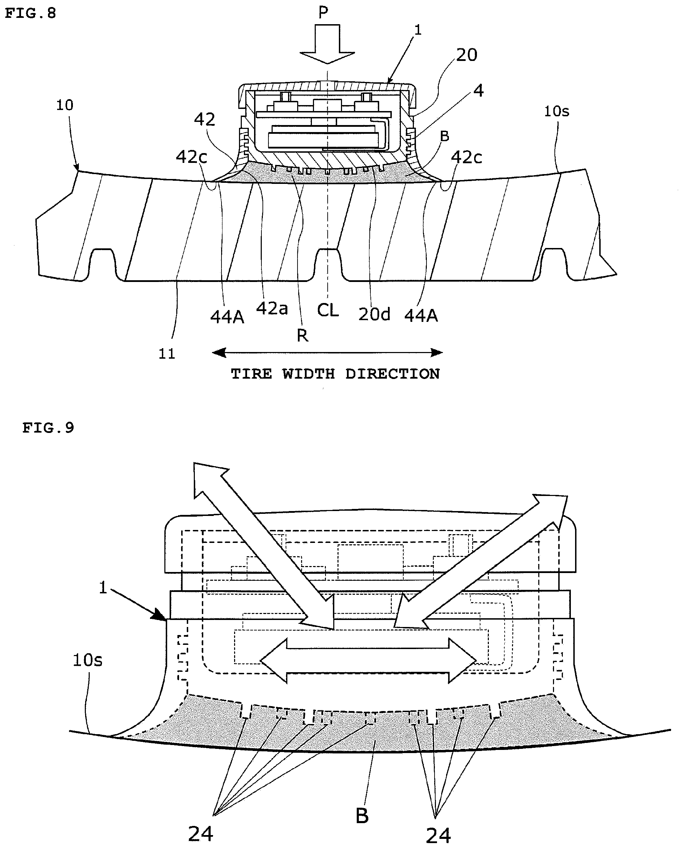

As illustrated in FIG. 8, in the attaching process, the distal end 44A and the distal end 44B, which are the end parts of the skirt 4 filled with the adhesive agent B in the filling part 100, are pressed toward the inner peripheral surface 10s of the tire 10 with a predetermined force P in a state of being abutted, and then dried by blowing hot air of about 100° by, the dryer for a predetermined time, for example. The functional component 1 is thereby bonded to the inner peripheral surface 10s of the tire 10. When pressing, care should be taken to avoid overflow of the adhesive more than necessary due to too much of the pressing force. If the adhesive agent overflows more than necessary, a bonding height cannot be maintained.

As discussed above, the functional component 1 is configured to be attached in a state that the adhesive agent B is densely filled in the filling space R enclosed by the outer bottom surface 20d facing the inner peripheral surface 10s of the tire 10, the inner peripheral surface 42a of the skirt 4 that expands in diameter and extends in a tubular shape from the peripheral edge of the outer bottom surface 20d toward the inner peripheral surface 10s, and the inner peripheral surface 10s of the tire 10.

Incidentally, it is preferable that the adhesive agent B has, for example, the following physical properties (characteristics). In order to fix the housing 2, which is made of a material such as plastic resin, to the tire 10 which is made of a rubber-based material, the adhesive agent B needs to have a peel strength required for both of the materials. In the present embodiment, the indication of the peel strength was set at 500 times the weight of the functional component 1. Specifically, if the weight of the functional component 1 is 30g, 30g x 500 times = 15,000g, or 15kg or more is set. Furthermore, since the tire 10 is an elastic body and the housing 2 is an inelastic body, it is preferable that the adhesive agent B has elasticity that can deform to follow deformation of the tire 10 so that the adhesive surface between the adhesive agent B and the tire 10 and the adhesive surface between the adhesive agent B and the housing 2 will not peel off due to the deformation of the tire 10 caused by running.

In order to get such elasticity, it is suitable that the hardness of the adhesive agent B is, for example, is about 40-70 (a dimensionless number) similar to that of the rubber forming the tire 10.

Furthermore, it is preferable that the curing time of the adhesive agent B is as short as possible when taking the productivity into consideration. Specifically, it is preferable that the adhesive agent B is cured by heating with a dryer at a heating temperature of 60°C or higher for one minute or more. For example, to exemplify a commercially available adhesive agent, Item No. TB1530B Hardness: A48 (durometer type A hardness) manufactured by ThreeBond Co., Ltd. may be applied. The hardness of the rubber of tire 10 is about HS50-80 (Shore hardness), and according to the conversion table between durometer hardness test values and Shore hardness test sites, A48 ≒ HS48, so the hardness is close to that of the rubber of tire 10, which is suitable. Incidentally, a dedicated adhesive agent having the physical properties described above may be used.

The explanation has been made, as to the property of the adhesive agent B, that it is preferable for the adhesive agent B after curing to have elasticity close to the hardness of the tire 10. In addition to this, the adhesive agent B is required to have a volume (capacity) for allowing deformation such as compression or elongation following the deformation of the tire 10. Therefore, by solidifying the adhesive agent B having the above-described physical properties in the state of being kept in the filling space R without leaking, sufficient thickness of the adhesive agent B after curing can be secured.

As for the thickness of the adhesive agent B after solidification, although it depends on the size of the tire 10, in order to set the thickness of the adhesive agent B to be in between 1mm and 3mm at the thinnest point, it is preferable to set a degree of buldging of the outer bottom surface 20d of the housing 2 and a length in the axis O direction to the distal end 44A of the skirt 4 extending from the peripheral edge of the outer bottom surface 20d According to the present embodiment, the thickness of the adhesive agent B can be freely set according to the shape of the filling part 100. However, if the thickness of the adhesive agent B is set too thick, the material cost of the adhesive agent B increases and it becomes a factor of increase in the weight, which may also be a factor of unbalance of the tire 10, thus it is preferable to set the thickness within the above-described range.

As illustrated in FIG. 9, because a plurality of convex parts 24 are provided, on the outer bottom surface 20d of the housing 2, at even intervals radially in the circumferential direction, as shown by the arrows in the figure, even if forces in the leftright direction or diagonally up-and-down direction act on the housing 2 inside the tire 10, the convex parts 24 function as spikes, so that the forces for peeling off the housing 2 and the adhesive agent B can be prevented from directly acting on the adhesion interface, hence the adhesive peeling strength can be improved.

As described above, the functional component 1 is fixed to the tire 10 by the adhesive agent B filled in the filling space R and integrated without being easily separated from the tire 10, so that various histories of the tire 10 in use measured by the module 6 can be used as individual information.

In the above-described embodiment, the skirt 4 is formed to be trumpet-shaped or fun-like shaped so that the skirt 4 expands in diameter toward the inner peripheral surface 10s. However, the shape is not limited to these shapes, for example, the skirt 4 may be formed in a cylindrical shape, a conical shape, or the like. Also, although the housing 2 and the skirt 4 are separately formed and integrated, the housing case 20 forming the housing 2 may be integrated with the skirt 4.

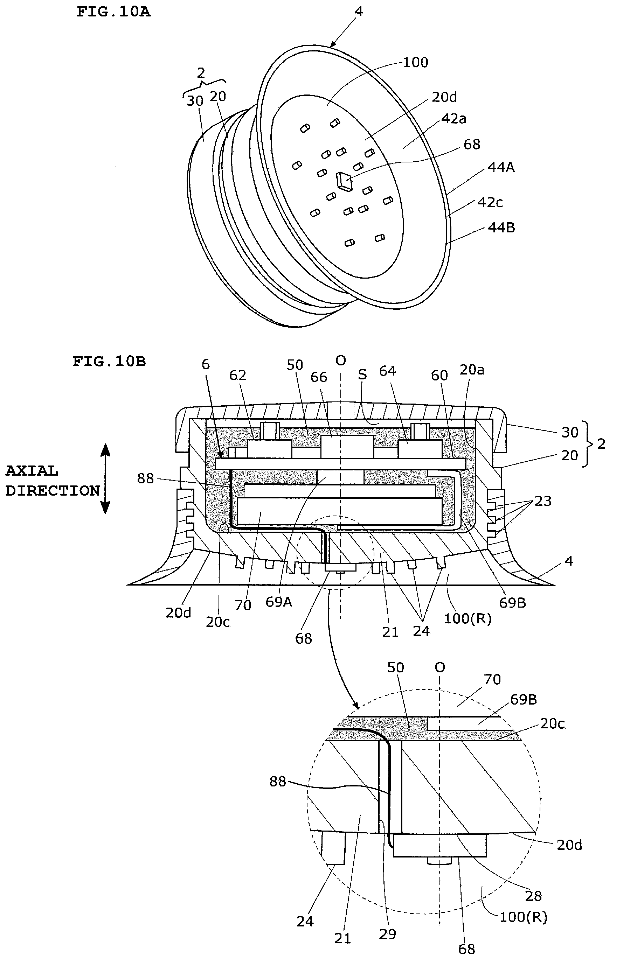

FIGS. 10A and 10B are respectively an external perspective view and a cross-sectional view of the functional component 1 according to another embodiment. In the above-described embodiment, the functional component 1 has been described as having the temperature sensor 62, the pressure sensor 64 and the acceleration sensor 66. However, as illustrated in FIGS. 10A and 10B, for example, the functional component 1 may be configured to have a strain sensor 68 that enables measurement of deformation of the tire 10.

As illustrated in FIGS. 10A and 10B, the strain sensor 68 is mounted on the outer bottom surface 20d of the housing 2. As illustrated in the figures, when the outer bottom surface 20d is formed to be spherical, the strain sensor 68 may be placed on the axis O, which is the most proximal position to the inner peripheral surface 10s of the tire 10. By mounting the strain sensor 68 in this manner, the strain when the tire 10 is deformed in the circumferential direction, the width direction or the like can be detected isotropically. With respect to the strain sensor 68, a wiring 88 is connected to the circuit board 60, for example, via a through hole 29 formed in the bottom part 21 of the housing case 20.

As illustrated in the enlarged view in FIG. 10B, a sensor mounting part 28 of the outer bottom surface 20d to which the strain sensor 68 is mounted may be formed in a flat shape in part. The range of the flat shape is preferably about the size of the strain sensor 68.

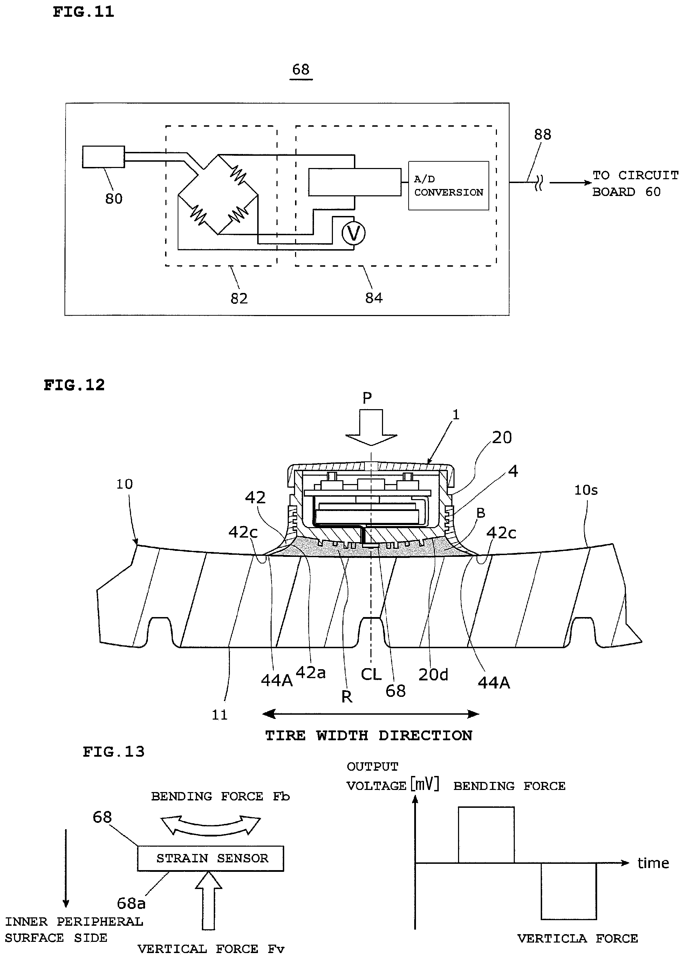

FIG. 11 is a diagram illustrating a schematic configuration of the strain sensor. As illustrated in FIG. 11, the strain sensor 68 includes, for example, a strain gage 80, a bridge circuit 82, a strain amplifier 84 and so on. The strain gage 80 constitutes a part of the bridge circuit 82. The bridge circuit 82 receives a voltage, for example, from the strain amplifier 84, and outputs to the strain amplifier 84, as a signal, a difference in voltage values resulting from the change in resistance values when the strain gage 80 detects the strain.

The strain amplifier 84 includes a signal amplifier circuit, an A/D converter, and a power supply part. The signal amplifier circuit amplifies a signal input from the bridge circuit 82, and the A/D converter converts the amplified signal into a digital signal and outputs to the circuit board 60. In other words, a voltage value corresponding to the amount of strain detected by the strain gage 80 is output as the digital signal to the circuit board 60.

In the present embodiment, as the strain sensor 68, a sensor chip configured as a rectangular so-called piezoresistive semiconductor is applied, in which the functions of the strain gage 80, the bridge circuit 82 and the strain amplifier 84 are integrated into a single chip, for example. The strain sensor 68 is mounted on the outer bottom surface 20d of the housing 2 in such a manner that, for example, a measurement surface 68a is defined and the measurement surface 68a faces the inner peripheral surface 10s of the tire 10.

As such, by making the strain sensor 68 as a semiconductor, the power consumption can be minimized and the power supply can be shared with other sensor 62 and so on. In addition, the reliability of measurement and durability can be improved.

FIG. 12 is a diagram illustrating a state in which the functional component 1 is bonded to the inner peripheral surface 10s of the tire 10.

The functional component 1 is bonded, in a state where the strain sensor 68 is attached to the outer bottom surface 20d, to the inner peripheral surface 10s of the tire 10 by filling the filling space R (filling part 100) formed by the outer bottom surface 20d and the inner peripheral surface 42a of the skirt 4 with the adhesive agent B. In other words, the strain sensor 68 is bonded to the inner peripheral surface 10s of the tire 10 in the state of being embedded in the adhesive agent B.

As described above, by mounting the strain sensor 68 to the tire 10 via the adhesive layer formed by the adhesive agent B, the strain associated with the deformation of the tire 10 can be suitably detected. In order to measure the strain of the rotating tire 10, it is desirable to mount the strain sensor directly on the tire 10. However, although the strain of the tire 10 varies in a wide range depending on condition of the part of the tire 10, the internal pressure, the temperature and so on, the amount of strain (deformation amount) of the tire 10 is generally larger than a measurement range that is measurable by the strain sensor 68.

For example, the amount of strain of the tire 10 corresponds to the amount of deformation of 1% or more relative to the original shape, that is, corresponds to the amount of deformation of 1mm or more of a material with a length of 100mm. On the other hand, since the inner structure of the strain gage is made of a metal material, it is difficult for the strain sensor 68 to measure a large deformation, hence, the amount of strain measurable by the strain sensor 68 is 0.1% or less, namely, equivalent to the deformation amount of 0.1mm of the material with the length of 100mm. Therefore, even if bonding the strain sensor 68 directly to the surface of the tire, such as the inner peripheral surface 10s of the tire 10, and trying to measure the deformation of the tire 10, because the measurement range of the strain sensor 68 does not match the deformation amount of the tire 10, the deformation cannot be measured.

In the present embodiment, the filling space R in which the strain sensor 68 is mounted is filled with the adhesive agent B having elasticity for fixing the functional component 1. Namely, the strain sensor 68 is fixed at a height of about 1mm to 3mm away from the inner peripheral surface (surface) 10s of the tire 10 by the intervention of the adhesive agent B. With this configuration, for example, the adhesive agent B can alleviate the deformation strain of the tire 10 to 1/10 or less, which is generated every time the tire 10 contacts the road surface, and the deformation strain of the tire 10 can be appropriately conveyed to the strain sensor 68.

In other words, as in the present embodiment, by providing the adhesive agent B between the strain sensor 68 and the inner peripheral surface 10s of the tire 10, the adhesive agent B functions as a buffer part for adjusting the measurement range, and it is made possible that the deformation of the tire 10 is appropriately measured by the strain sensor 68.

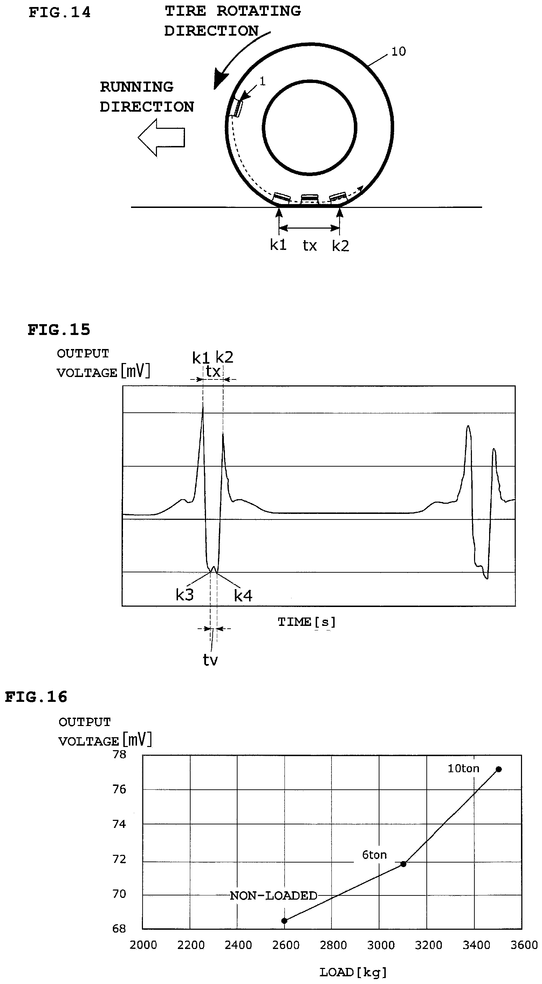

FIG. 13 is a diagram illustrating an output of the strain sensor 68. FIG. 14 is a diagram illustrating positions of the functional component 1 during rotation of the tire 10. As illustrated in FIG. 13, the strain sensor 68 outputs a voltage value of a positive value when detecting a bending force Fb that causes the measuring surface 68a to warp, and outputs a voltage value of a negative value when detecting a vertical force Fv perpendicular to the measuring surface 68a. As illustrated in FIG. 14, the bending force Fb during rotation of the tire 10 is detected in the vicinity of a step-in position k1 where the tire 10 contacts the road surface and a kick-out position k2 where the tire 10 leaves the road surface. The vertical force Fv is detected, for example, as a vertical force detection time tv shown in FIG. 15 or the like, which is a range in which the bending force Fb does not act, within the period from the step-in position k1 to the kick-out position k2 in which the tire 10 is in contact with the road surface.

FIG. 15 is a diagram illustrating an example of the strain detected by the strain sensor 68 during rotation of the tire. FIG. 16 is a diagram illustrating changes in a loaded state of the vehicle calculated on the basis of the strain detected by the strain sensor 68. As illustrated in FIG. 14, the strain sensor 68 moves its position in the tire circumferential direction as the tire 10 rotates, detects a deformation state of the tire 10, and outputs a time-series signal indicating the deformation.

By processing the obtained signal by the processing means, which is not shown in the figure, provided in advance on the circuit board 60, the load applied to the tire 10 can be calculated and its history can be recorded, for example.

Then, by transmitting load values calculated at each wheel of the tire mounted on the vehicle from the functional component 1 attached to each tire to the main unit provided in the vehicle, which is not shown in the figure, and calculating its combined value, the change in the total weight of the vehicle can be obtained, as illustrated in FIG. 16.

The use of the bending force Fb and the vertical force Fv directly obtained by the strain sensor 68 is not limited to this, but may also be used for the wear of tire, for example.

According to such a configuration, by directly obtaining the bending force Fb and the vertical force Fv, for example, by detecting a peak of the bending force Fb, the step-in position k1 and the kick-out position k2 can be easily detected. Furthermore, because the ground contact time tx detected on the basis of the step-in position k1 and the kick-out position k2, and the time, at which the vertical force Fv is detected, can be obtained by a simple calculation process, it is possible to improve the life of the battery and makes the life of the battery longer than the life of the tire until the tire reaches the limit of use.

In other words, in the method of estimating the wear of the tire, the load applied to the tire and so on, on the basis of the acceleration information detected by the acceleration sensor 66, physical phenomena that cause the wear of the tire or the change in the load are obtained indirectly. Therefore, in order to obtain as highly precise result as possible that is trustable, an enormous amount of acceleration information and an extensive processing are required, which leads to severe consumption of the battery that is to be the power source of the functional component 1, hence there is concern that the life of the functional component 1 tends to be easily shortened.

On the other hand, according to the above-described configuration, since the tire wear and the load can be calculated without the need for an extensive processing, it is possible to improve the life of the battery.

Incidentally, with regard to the sensors to be provided in the functional component 1, that is, the temperature sensor 62, the pressure sensor 64, the acceleration sensor 66 and the strain sensor 68 may be selectively mounted on the board.

As described above, the functional component according to the embodiment of the present invention is a functional component in which an electronic component capable of acquiring information inside a tire is housed and which is attachable to an inner peripheral surface of the tire, the functional component comprising a housing having a housing part for housing the electronic component and a bottom surface facing the inner peripheral surface of the tire, and a tubular part extending from a peripheral edge of the bottom surface toward the inner peripheral surface.

According to this configuration, by filling an adhesive agent in the container having an opening on one side, which is formed by the tubular part extending from the peripheral edge of the bottom surface of the housing toward the inner peripheral surface of the tire, placing the tubular side on the tire surface, and thereafter, curing the adhesive agent, the functional component can be bonded to the inner surface of the tire while securing the thickness of the adhesive agent.

As another configuration of the functional component, the tubular part may extend in diameter and expand from the peripheral edge of the bottom surface toward the inner peripheral surface. In addition, a convex part or a concave part may be formed on the bottom surface, or in a case where the convex part is formed on the bottom surface, a distal end of the convex part may be located closer to a side of the bottom surface than an end part of the tubular part. Furthermore, the bottom surface may be formed so as to bulge out toward the inner peripheral surface of the tire. Furthermore, a strain detecting means that detects strain of the tire may be provided on the bottom surface.

As a structure for attaching a functional component, the structure may be a structure for attaching, to a tire, the functional component described above in which the end part of the tubular part is abutted against the inner peripheral surface of the tire, and an adhesive agent is filled in a filling space enclosed by an inner peripheral surface of the tubular part, the bottom surface of the housing, and the inner peripheral surface of the tire.

Furthermore, as a structure of a tire, the structure may be such that the functional component is attached to the inner peripheral surface of the tire by the above-described attachment structure.

### REFERENCE SIGN LIST

1: Functional component, 2: Housing, 4: Skirt, 6: Module, 10: Tire, 48: Potting material, 60: Circuit board, 70: Battery, B: adhesive agent, S: housing space.

## Claims

1. An attachment structure comprising: a functional component (1) in which an electronic component capable of acquiring information inside a tire (10) is housed and which is attachable to an inner peripheral surface of the tire (10), the functional component (1) comprising:
a housing (2) having a housing part for the electronic component and a bottom surface facing the inner peripheral surface of the tire (10);
a tubular part extending from a peripheral edge of the bottom surface toward the inner peripheral surface, and
an adhesive agent (B); **characterized in that** the end part of the tubular part is abuttable against the inner peripheral surface of the tire (10), and the adhesive agent (B) is filled in a filling space enclosed by an inner peripheral surface of the tubular part, the bottom surface of the housing (2), and the inner peripheral surface of the tire (10).

2. The attachment structure according to claim 1, wherein the tubular part expands in diameter and extends from the peripheral edge of the bottom surface toward the inner peripheral surface.

3. The attachment structure according to claim 1 or 2, wherein a convex part or a concave part is formed on the bottom surface.

4. The attachment structure according to claim 3, wherein a distal end of the convex part is located closer to a side of the bottom surface than an end part of the tubular part.

5. The attachment structure according to any of claims 1-4, wherein the bottom surface bulges out towards the inner peripheral surface.

6. The attachment structure according to any of claims 1-5, wherein a strain detecting means that detects strain of the tire (10) is provided on the bottom surface.

7. A tire (10) wherein the functional component (1) is attached to the inner peripheral surface of the tire (10) by the attachment structure according to any one of claims 1 to 6.

## Patentansprüche

1. Befestigungsstruktur, Folgendes umfassend: eine funktionale Komponente (1), in der eine elektronische Komponente untergebracht ist, die in der Lage ist, Informationen innerhalb eines Reifens (10) zu erfassen und die an einer inneren Umfangsfläche des Reifens (10) befestigbar ist, wobei die funktionale Komponente (1) Folgendes umfasst:
ein Gehäuse (2) mit einem Gehäuseteil für die elektronische Komponente und einer Bodenfläche, die der inneren Umfangsfläche des Reifens (10) zugewandt ist;
einen rohrförmigen Teil, der sich von einer Umfangskante der Bodenfläche in Richtung der inneren Umfangsfläche erstreckt, und
ein Haftmittel (B);
**dadurch gekennzeichnet, dass**
der Endteil des rohrförmigen Teils an der inneren Umfangsfläche des Reifens (10) anliegen kann, und das Haftmittel (B) in einen Füllraum gefüllt ist, der von einer inneren Umfangsfläche des rohrförmigen Teils, der Bodenfläche des Gehäuses (2) und der inneren Umfangsfläche des Reifens (10) eingeschlossen ist.

2. Befestigungsstruktur nach Anspruch 1, wobei der rohrförmige Teil im Durchmesser zunimmt und sich von der Umfangskante der Bodenfläche zur inneren Umfangsfläche erstreckt.

3. Befestigungsstruktur nach Anspruch 1 oder 2, wobei ein konvexer Teil oder ein konkaver Teil auf der Bodenfläche ausgebildet ist.

4. Befestigungsstruktur nach Anspruch 3, wobei sich ein distales Ende des konvexen Teils näher an einer Seite der Bodenfläche befindet als ein Endteil des rohrförmigen Teils.

5. Befestigungsstruktur nach einem der Ansprüche 1 bis 4, wobei sich die Bodenfläche zur inneren Umfangsfläche hin vorwölbt.

6. Befestigungsstruktur nach einem der Ansprüche 1 bis 5, wobei auf der Bodenfläche ein Beanspruchungserfassungsmittel bereitgestellt ist, das eine Beanspruchung des Reifens (10) erfasst.

7. Reifen (10), wobei die funktionale Komponente (1) an der inneren Umfangsfläche des Reifens (10) durch die Befestigungsstruktur nach einem der Ansprüche 1 bis 6 befestigt ist.

## Revendications

1. Structure de fixation, comprenant : un composant fonctionnel (1) dans lequel un composant électronique capable d'acquérir des informations à l'intérieur d'un pneumatique (10) est logé, et qui peut être fixé sur une surface périphérique interne du pneumatique (10), le composant fonctionnel (1) comprenant :
un boîtier (2) comportant une partie de boîtier pour le composant électronique et une surface inférieure faisant face à la surface périphérique interne du pneumatique (10) ;
une partie tubulaire s'étendant d'un bord périphérique de la surface inférieure vers la surface périphérique interne ; et
un agent adhésif (B) ;
**caractérisée en ce que**
la partie d'extrémité de la partie tubulaire peut être mise en butée contre la surface périphérique interne du pneumatique (10), et l'agent adhésif (B) est rempli dans un espace de remplissage renfermé par une surface périphérique interne de la partie tubulaire, la surface inférieure du boîtier (2), et la surface périphérique interne du pneumatique (10).

2. Structure de fixation selon la revendication 1, dans laquelle la partie tubulaire augmente en diamètre et s'étend du bord périphérique de la surface inférieure vers la surface périphérique interne.

3. Structure de fixation selon la revendication 1 ou 2, dans laquelle une partie convexe ou une partie concave est formée sur la surface inférieure.

4. Structure de fixation selon la revendication 3, dans laquelle une extrémité distale de la partie convexe est située plus près d'un côté de la surface inférieure qu'une partie d'extrémité de la partie tubulaire.

5. Structure de fixation selon l'une quelconque des revendications 1 à 4, dans laquelle la surface inférieure se bombe vers la surface périphérique interne.

6. Structure de fixation selon l'une quelconque des revendications 1 à 5, dans laquelle un moyen de détection de contrainte qui détecte une contrainte du pneumatique (10) est fourni sur la surface inférieure.

7. Pneumatique (10), dans lequel le composant fonctionnel (1) est fixé sur la surface périphérique interne du pneumatique (10) par la structure de fixation selon l'une quelconque des revendications 1 à 6.
